(19) Europäisches Patentamt

European Patent Office

Office européen des brevets

(11) **EP 0 980 708 B1**

(12) **FASCICULE DE BREVET EUROPEEN**

(45) Date de publication et mention
de la délivrance du brevet:
**20.08.2003 Bulletin 2003/34**

(51) Int Cl.[7]: **B01J 29/58**, C10G 47/20

(21) Numéro de dépôt: **99401240.9**

(22) Date de dépôt: **21.05.1999**

(54) **Catalyseur à base d'une zéolithe NU-85, NU-86 ou NU-87 comprenant un élément du groupe VB et son utilisation en hydroconversion de charges pétrolières hydrocarbonées**

Zeolit NU85, NU86 oder NU87 Katalysator, welcher eine Gruppe VB Metall enthält und dessen Verwendung in die Wasserstoffumsetzung von Kohlenwasserstoffeinsätzen

Catalyst containing zeolite NU85, NU86 or NU87 and a group VB metal and its application in the hydroconversion of hydrocarbon oils

(84) Etats contractants désignés:
**DE ES FR GB IT NL**

(30) Priorité: **28.05.1998 FR 9806777**

(43) Date de publication de la demande:
**23.02.2000 Bulletin 2000/08**

(73) Titulaire: **INSTITUT FRANCAIS DU PETROLE**
**92500 Rueil Malmaison (FR)**

(72) Inventeurs:
• **Benazzi, Eric**
**78400 Chatou (FR)**

• **Marchal-George, Nathalie**
**69230 Saint Genis Laval (FR)**
• **Diehl, Fabrice**
**92500 Rueil Malmaison (FR)**
• **Kasztelan, Slavik**
**92500 Rueil Malmaison (FR)**

(56) Documents cités:
EP-A- 0 462 745          EP-A- 0 463 768
EP-A- 0 863 198          WO-A-97/09397
DE-A- 4 226 112          US-A- 5 464 799

**Description**

La présente invention concerne un catalyseur d'hydrocraquage de charges hydrocarbonées, ledit catalyseur comprenant au moins une matrice amorphe ou mal cristallisée de type oxyde, au moins un élément (métal) du groupe VB, de préférence le niobium, au moins une zéolithe choisie dans le groupe constitué par les zéolithes NU-85, NU-86 et NU-87, éventuellement au moins un élément (métal) choisi parmi le groupe VIB et le groupe VIII de la classification périodique des éléments, de préférence le molybdène et le tungstène, le cobalt, le nickel et le fer. Le catalyseur renferme également un élément choisi parmi le bore et le silicium, éventuellement du phosphore et éventuellement au moins un élément du groupe VIIA (groupe des halogènes) tel que par exemple le fluor.

La présente invention concerne également les procédés de préparation du dit catalyseur, ainsi que son utilisation pour l'hydrocraquage de charges hydrocarbonées telles que les coupes pétrolières, les coupes issues du charbon contenant des composés aromatiques, et/ou oléfiniques, et/ou naphténiques, et/ou paraffiniques, les dites charges contenant éventuellement des métaux, et/ou de l'azote, et/ou de l'oxygène et/ou du soufre.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant constituer d'excellente bases pour huiles. Par rapport au craquage catalytique, l'intérêt de l'hydrocraquage catalytique est de fournir des distillats moyens, carburéacteurs et gazoles, de très bonne qualité. L'essence produite présente un indice d'octane beaucoup plus faible que celle issue du craquage catalytique.

Les catalyseurs utilisés en hydrocraquage sont tous du type bifonctionnel associant une fonction acide à une fonction hydrogénante. La fonction acide est apportée par des supports de grandes surfaces (150 à 800 m$^2$.g$^{-1}$ généralement) présentant une acidité superficielle, telles que les alumines halogénées (chlorées ou fluorées notamment), les combinaisons d'oxydes de bore et d'aluminium, les silice-alumines amorphes et les zéolithes. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI de la classification périodique tels que molybdène et tungstène et au moins un métal du groupe VIII.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée (supérieure ou égale à 390 °C), et à vitesse spatiale d'alimentation faible (la VVH exprimée en volume de charge à traiter par unité de volume de catalyseur et par heure est généralement inférieure ou égale à 2) mais dotés d'une très bonne sélectivité en distillats moyens. Inversement, une fonction acide forte et une fonction hydrogénante faible donnent des catalyseurs actifs mais présentant de moins bonnes sélectivités en distillats moyens. La recherche d'un catalyseur convenable sera donc centrée sur un choix judicieux de chacune des fonctions pour ajuster le couple activité/sélectivité du catalyseur.

Ainsi, c'est un des grands intérêts de l'hydrocraquage de présenter une grande flexibilité à divers niveaux : flexibilité au niveau des catalyseurs utilisés, qui amène une flexibilité des charges à traiter et au niveau des produits obtenus. Un paramètre aisé à maîtriser est l'acidité du support du catalyseur.

Les catalyseurs conventionnels de l'hydrocraquage catalytique sont, pour leur grande majorité, constitués de supports faiblement acides, tels les silice-alumines amorphes par exemple. Ces systèmes sont plus particulièrement utilisés pour produire des distillats moyens de très bonne qualité, et encore, lorsque leur acidité est très faible, des bases huiles.

Dans les supports peu acides, on trouve la famille des silice-alumines amorphes. Beaucoup de catalyseurs du marché de l'hydrocraquage sont à base de silice-alumine associée, soit à un métal du groupe VIII soit, de préférence quand les teneurs en poisons hétéroatomiques de la charge à traiter dépassent 0,5 % en poids, à une association de sulfures des métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les catalyseurs comportant par exemple de la zéolithe Y de type structural FAU, ou les catalyseurs comportant par exemple une zéolithe de type bêta présentent quant à eux une activité catalytique supérieure à celle des silice-alumines amorphes, mais présentent des sélectivités en produits légers qui sont plus élevées.

D'autre part, des sulfures simples d'éléments du groupe VB ont été décrits en tant que constituants de catalyseurs d'hydroraffinage de charges hydrocarbonées, comme par exemple le trisulfure de niobium dans le brevet US-A-5.294.333. Des mélanges de sulfures simples comprenant au moins un élément du groupe VB et un élément du groupe VIB ont également été testés comme constituants de catalyseurs d'hydroraffinage de charges hydrocarbonées, comme par exemple dans le brevet US-A-4.910.181 ou le brevet US-A-5.275.994.

Le catalyseur selon EP0863 198 A contient au moins 5 % pds d'au moins un élément hydro-déshydrogénant choisi dans le groupe formé par les métaux non nobles du GVIII, les métaux de GVIB, et le niobium,et le catalyseur contient de préférence du phosphore.

De préférence, le tamis est une zéolithe NU-10, NU-23, NU-87, EU-13, ou Theta-1.

Selon WO 97/09397, le tamis est une zéolithe NU-10, NU-23, NU-87, EU-13, ou Theta-1.

D'autre part le catalyseur comporte au moins une fonction hydro-déshydrogénante, par exemple un métal du groupe VIII et/ou un métal du groupe VI B, et/ou le rhénium et/ou le niobium.

Les travaux de recherche effectués par le demandeur sur de nombreuses zéolithes et solides microporeux cristallisés et sur les phases actives hydrogénantes, l'ont conduit à découvrir que, de façon surprenante, un catalyseur d'hydrocraquage de charges hydrocarbonées comprenant au moins une matrice amorphe ou mal cristallisée généralement poreuse telle que l'alumine, au moins un élément du groupe VB de la classification périodique des éléments, tels que le tantale, le niobium et le vanadium, de préférence le niobium, au moins une zéolithe choisie dans le groupe constitué par les zéolithes NU-85, NU-86 et NU-87 , éventuellement au moins un élément du groupe VIB de ladite classification, tels que le chrome, le molybdène et le tungstène, de préférence le molybdène ou le tungstène, de façon encore plus préférée le molybdène, éventuellement un élément du groupe VIII, c'est-à-dire un élément choisi dans le groupe constitué par : Fe, Ru, Os, Co, Rh, Ir, Ni, Pd, Pt, de préférence le fer, le cobalt ou le nickel, éventuellement un élément choisi parmi le bore et le silicium, éventuellement du phosphore et éventuellement un élément du groupe VIIA, et de préférence le fluor permet d'obtenir des activités, c'est à dire un niveau de conversion, plus élevées qu'avec les catalyseurs connus dans l'art antérieur.

Ledit catalyseur présente une activité en hydrocraquage plus importante que celles des formules catalytiques à base d'élément du groupe VIB connues de l'art antérieur. Sans vouloir être lié par une quelconque théorie, il semble que cette activité particulièrement élevée des catalyseurs de la présente invention est due aux propriétés particulières du sulfure de l'élément du groupe VB. La présence d'un tel sulfure ayant des propriétés acides permet non seulement une amélioration des propriétés craquantes mais de plus une amélioration des propriétés hydrogénante, hydrodésulfurante, hydrodéazotante par rapport au sulfure de l'élément du groupe VIB et en particulier du sulfure de molybdène ou de tungstène utilisés habituellement pour la fonction hydrogénante.

Le catalyseur de la présente invention renferme généralement en % poids par rapport à la masse totale du catalyseur :

- 0,1 à 99,8%, de préférence de 0,1 à 90%, de manière encore plus préférée de 0,1 à 80%, et de manière très préférée 0,1 à 70% d'au moins une zéolithe choisie dans le groupe formé par les zéolithes NU-85, NU-86 et NU-87,
- 0,1 à 60%, de préférence de 0,1 à 50%, et de manière encore plus préférée de 0,1 à 40%, d'au moins un élément choisi dans le groupe VB,
- 0,1 à 99%, de préférence de 1 à 99 % d'au moins une matrice minérale poreuse amorphe ou mal cristallisée de type oxyde

le dit catalyseur étant caractérisé en ce qu'il renferme éventuellement :

- 0 à 60%, de préférence de 0,1 à 50% et de manière encore plus préférée de 0,1 à 40% d'au moins un élément choisi parmi les éléments du groupe VIB et du groupe VIII,
- 0,1 à 15% et de manière encore plus préférée de 0,1 à 10% d'au moins un élément promoteur choisi parmi le silicium et le bore, non compris le silicium éventuellement contenu dans la charpente de la zéolithe et éventuellement encore
- 0 à 20%, de préférence de 0,1 à 15% et de manière encore plus préférée de 0,1 à 10% de phosphore et/ou au moins un élément choisi dans le groupe VIIA, de préférence le fluor.

Lorsqu'il est présent, l'élément promoteur silicium est sous forme amorphe et localisé principalement sur la matrice. Les éléments du groupe VB, VIB et du groupe VIII du catalyseur de la présente invention peuvent être présents en totalité ou partiellement sous la forme métallique et/ou oxyde et/ou sulfure.

Les catalyseurs selon l'invention peuvent être préparés par toutes les méthodes connues de l'homme du métier.

Un procédé préféré de préparation du catalyseur selon la présente invention comprend les étapes suivantes :

a) on sèche et on pèse un solide dénommé le précurseur, renfermant au moins les composés suivants : au moins une matrice, au moins une zéolithe choisie dans le groupe constitué par les zéolithes NU-85, NU-86 et NU-87, éventuellement au moins un élément choisi par les éléments du groupe VIB et du groupe VIII, éventuellement au moins un élément choisi parmi le bore et le silicium, éventuellement du phosphore, éventuellement au moins un élément du groupe VIIA, le tout étant de préférence mis en forme,

b) le solide sec obtenu à l'étape a) est calciné à une température d'au moins 150°C.

c) on imprègne le solide précurseur défini à l'étape b), par une solution contenant au moins un élément du groupe VB, de préférence le niobium,

d) on laisse reposer le solide humide sous une atmosphère humide à une température comprise entre 10 et 120°C,

e) on sèche le solide humide obtenu à l'étape b) à une température comprise entre 60 et 150°C,

La préparation du précurseur de l'étape a) ci-dessus peut être réalisée selon toutes les méthodes classiques de l'homme du métier. Selon un procédé de préparation préféré, le précurseur est obtenu par mélange de la matrice et de la zéolithe choisie dans le groupe constitué par les zéolithes NU-85, NU-86 et NU-87 puis mis en forme séché et calciné. Les éléments des groupes VIB, VIII, et ceux du choisi parmi le bore et le silicium, éventuellement le phosphore et le groupe VIIA, sont alors introduits par toute méthode connue de l'homme du métier, à l'une quelconque des étapes a) à e), avant ou après la mise en forme et avant ou après la calcination dudit mélange.

La mise en forme peut être réalisée par exemple par extrusion, par pastillage, par la méthode de la goutte d'huile (oil-drop), par granulation au plateau tournant ou par toute autre méthode bien connue de l'homme du métier. Au moins une calcination peut être effectuée après l'une quelconque des étapes de la préparation, elle est habituellement effectuée sous air à une température d'au moins 150°C, de préférence au moins 300°C. Ainsi, le produit obtenu à l'issue de l'étape a) et/ou de l'étape e) et/ou éventuellement après introduction du ou des éléments des groupes VIB, VIII, ceux choisis parmi le bore et le silicium, éventuellement le phosphore et les éléments du groupe VIIA, est alors éventuellement calcinée sous air, usuellement à une température d'au moins 150°C, de préférence au moins 250°C, de manière plus préférée entre environ 350 et 1000°C.

L'élément hydrogénant peut être introduit à toute étape de la préparation, de préférence lors du mélange, ou de manière très préférée après mise en forme. La mise en forme est suivie d'une calcination, l'élément hydrogénant est introduit avant ou après cette calcination. La préparation se termine dans tous les cas par une calcination à une température de 250 à 600°C. Une des méthodes préférées dans la présente invention consiste à malaxer au moins une zéolithe choisie dans le groupe constitué par les zéolithes NU-85, NU-86 et NU-87, dans un gel humide d'alumine pendant quelques dizaines de minutes, puis à passer la pâte ainsi obtenue à travers une filière pour former des extrudés de diamètre compris entre 0,4 et 4 mm. La fonction hydrogénante peut être alors introduite en partie seulement (cas, par exemple, des associations d'oxydes de métaux des groupes VIB et VIII) ou en totalité au moment du malaxage de la zéolithe, c'est à dire d'au moins une zéolithe choisie dans le groupe constitué par les zéolithes NU-85, NU-86 et NU-87, avec au moins un gel d'oxyde choisi comme matrice. Elle peut être introduite par une ou plusieurs opérations d'échange ionique sur le support calciné constitué d'au moins une zéolithe choisie dans le groupe consituté par les zéolithes NU-85, NU-86 et NU-87, dispersée dans au moins une matrice, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VIB (notamment le molybdène ou le tungstène) ont été préalablement introduits au moment du malaxage du support. Elle peut enfin être introduite par une ou plusieurs opérations d'imprégnation du support calciné constitué d'au moins une zéolithe choisie dans le groupe formé par les zéolithes NU-85, NU-86 et NU-87 et d'au moins une matrice, par des solutions contenant les précurseurs des oxydes de métaux des groupes VIB et/ou VIII, les précurseurs des oxydes de métaux de groupe VIII étant de préférence introduits après ceux du groupe VIB ou en même temps que ces derniers.

D'une façon préférée, le support est imprégné par une solution aqueuse. L'imprégnation du support est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le bore et/ou le silicium et éventuellement le phosphore et/ou l'élément choisi dans le groupe VIIA des ions halogénures, de préférence le fluor, peuvent être introduits dans le catalyseur à divers niveaux de la préparation selon toute technique connue de l'homme de métier.

Une méthode préférée selon l'invention consiste à déposer le ou les éléments promoteurs choisis par exemple le couple bore-silicium sur le précurseur calciné ou non, de préférence calciné. Pour cela on prépare une solution aqueuse d'au moins un sel de bore tel que le biborate d'ammonium ou le pentaborate d'ammonium en milieu alcalin et en présence d'eau oxygénée et on procède à une imprégnation dite à sec, dans laquelle on rempli le volume des pores du précurseur par la solution contenant le bore. Dans le cas où l'on dépose par exemple du silicium, on utilisera par exemple une solution d'un composé du silicium de type silicone.

Le dépôt de bore et de silicium peut aussi être réalisé de manière simultanée en utilisant par exemple une solution contenant un sel de bore et un composé du silicium de type silicone. Ainsi, par exemple dans le cas où le précurseur est un catalyseur de type nickel-molybdène supporté sur alumine et zéolithe choisie dans le groupe constitué par les zéolithes NU-85, NU-86 et NU-87, il est possible d'imprégner ce précurseur par de la solution aqueuse de biborate d'ammonium et de silicone Rhodorsil E1P de la société Rhône Poulenc, de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures. On dépose ensuite l'élément du groupe VB selon toute méthode connue de l'homme de métier.

L'élément promoteur choisi parmi le silicium et le bore, éventuellement le phosphore et/ou l'élément choisi parmi les ions halogénures du groupe VIIA, peuvent être introduits par une ou plusieurs opérations d'imprégnation avec excès de solution sur le précurseur calciné.

Ainsi, par exemple, il est possible d'imprégner le précurseur par une solution aqueuse de biborate d'ammonium et/ou de silicone Rhodorsil E1P de la société Rhône Poulenc de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures. On dépose ensuite l'élément du groupe VB selon toute méthode connue de l'homme de métier.

D'autres séquences d'imprégnation peuvent être mise en oeuvre pour obtenir le catalyseur de la présente invention.

Il est par exemple possible d'imprégner le précurseur avec une solution contenant un des éléments promoteurs (B, Si, éventuellement P, VIIA), de sécher, de calciner puis d'imprégner le solide obtenu avec la solution contenant un autre élément promoteur, de sécher, de calciner. Il est aussi possible d'imprégner le précurseur avec une solution contenant deux des éléments promoteurs, de sécher, de calciner puis d'imprégner le solide obtenu avec la solution contenant un autre élément promoteur, de sécher, et de procéder à une calcination finale. On dépose ensuite l'élément du groupe VB selon toute méthode connue de l'homme de métier.

Le catalyseur de la présente invention peut renfermer un élément (métal) du groupe VIII tel que fer, cobalt, nickel, ruthénium, rhodium, palladium, osmium, iridium ou platine. Parmi les éléments du groupe VIII on emploie de péférence un élément choisi dans le groupe formé par le fer, le cobalt, le nickel et le ruthénium. D'une manière avantageuse on utilise les associations d'éléments suivantes nickel-niobium-molybdène, cobalt-niobium-molybdène, fer-niobium-molybdène, nickel-niobium-tungstène, cobalt-niobium-tungstène, fer-niobium-tungstène, les associations préférés étant : nickel-niobium-molybdène, cobalt-niobium-molybdène. Il est également possible d'utiliser des associations de quatre éléments par exemple nickel-cobalt-niobium-molybdène. On peut également utiliser des associations contenant un métal noble tel que ruthénium-niobium-molybdène, ou encore ruthénium-nickel-niobium-molybdène.

Dans le cas où les éléments sont introduits en plusieurs imprégnations des sels précurseurs correspondants, une étape de calcination intermédiaire du catalyseur devra être effectuée à une température comprise entre 250 et 600 °C.

L'imprégnation du molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'homme du métier.

L'imprégnation du niobium peut être facilitée par ajout d'acide oxalique et éventuellement d'oxalate d'ammonium dans les solutions de d'oxalate de niobium. D'autres composés peuvent être utilisés pour améliorer la solubilité et faciliter l'imprégnation du niobium comme il est bien connu de l'homme du métier.

La sulfuration des solides contenant au moins un élément du groupe VB sous forme oxyde se révèle être très difficile par la plupart des méthodes classiques de sulfuration connues de l'homme du métier. En effet par exemple, les catalyseurs contenant au moins un élément du groupe VB supporté sur une matrice du type alumine sont connus pour être très difficiles à sulfurer une fois que l'association élément du groupe VB-alumine a été calcinée à une température supérieure à 200°C.

La sulfuration peut se faire par toute méthode connue de l'homme du métier. La méthode préférée selon l'invention consiste à chauffer le catalyseur non calciné sous flux d'un mélange hydrogène-hydrogène sulfuré ou sous flux d'un mélange azote-hydrogène sulfuré ou encore sous hydrogène sulfuré pur à une température comprise entre 150 et 800°C, de préférence entre 250 et 600°C, généralement dans une zone réactionnelle à lit traversé. Ainsi, par exemple dans le cas préféré où l'élément du groupe VB est le niobium et où l'élément du groupe VIB est le molybdène, il est possible d'imprégner le support, par exemple le mélange alumine-NU-85, par de l'heptamolybdate d'ammonium, de procéder à un séchage à 80°C, puis d'imprégner par de l'oxalate de niobium, de procéder à un séchage à 80°C, et de procéder à une sulfuration par exemple et de façon préférée par $H_2S$ en lit traversé, par exemple à 500°C pendant 10 heures.

Les zéolithes NU-85, NU-86 et NU-87 qui rentrent éventuellement dans la composition des catalyseurs de la présente invention sont décrites ci-après.

La zéolithe NU-85 utilisée dans ce brevet est décrite dans le brevet EP-A2-462745. Les zéolithes NU-85 qui entrent dans la composition selon l'invention sont utilisées avec les teneurs en silicium et aluminium obtenues à l'issue de la synthèse.

La zéolithe NU-86, sous forme hydrogène ou partiellement sous forme hydrogène, désignée par H-NU-86 est obtenue par calcination et/ou échanges ioniques de la zéolithe NU-86 brute de synthèse, et employée éventuellement dans le procédé selon l'invention. Les synthèses de ces zéolithes sont décrites dans la demande de brevet EP-0 463 768

Le type structural de cette zéolithe n'a pas encore été officiellement attribué par la commission de synthèse de l'IZA (International Zeolite Association). Cependant, suite aux travaux publiés au 9ieme Congrès International sur les Zéolithes par J.L. Casci, P.A. Box et M.D. Shannon ("Proceedings of the 9th International Zeolite Conference, Montreal 1992, Eds R. Von Ballmoos et al., 1993 by Butterworth) il apparaît que :

- la zéolithe NU-86 possède un système microporeux tridimensionnel;
- ce système microporeux tridimensionnel est constitué de canaux droits dont l'ouverture de pore est délimitée par 11 atomes T (atomes tétraédriques : Si, Al, Ga, Fe..), de canaux droits délimités alternativement par des ouvertures à 10 et 12 atomes T et des canaux sinusoïdaux aussi délimités de façon alternative par des ouvertures à 10 et 12 atomes T.

On entend par le terme ouverture de pores à 10, 11 ou 12 atomes tétraédriques (T) des pores constitués de 10, 11 ou 12 côtés.

La zéolithe NU-86 utilisée dans la composition selon l'invention est au moins en partie, de préférence pratiquement totalement, sous forme acide, c'est-à-dire sous forme hydrogène (H+). Le rapport atomique Na/T est généralement inférieur à 90% et de préférence inférieur à 50% et de manière encore plus préférée inférieur à 10%.

Les zéolithes NU-86 qui entrent dans la composition selon l'invention sont utilisées avec les teneurs en silicium et aluminium obtenues à l'issue de la synthèse.

En ce qui concerne la zéolithe NU-87 de type structural NES éventuellement utilisée dans la présente invention, elle est décrite dans le brevet EP-A1-377291 ainsi que dans le document "Atlas of Zeolite Structure Types", de W.M. Meier, D.H. Olson and Ch. Baerlocher, Fourth revised edition 1996, Elsevier.

On emploiera de préférence les zéolithes NU-86 et NU-87 au moins en partie sous forme acide (et de préférence en totalité sous forme H) ou partiellement échangée avec des cations métalliques, par exemple des cations des métaux alcalino-terreux.

Les zéolithes NU-87 qui entrent dans la composition selon l'invention sont utilisées avec les teneurs en silicium et aluminium obtenues à la synthèse.

La matrice minérale poreuse, habituellement amorphe ou mal cristallisée, est en général constituée d'au moins un oxyde réfractaire sous forme amorphe ou mal cristallisé. Ladite matrice est habituellement choisie dans le groupe formé par l'alumine, la silice, la silice-alumine, ou un mélange de aux moins deux des oxydes cités ci dessus. On peut choisir également les aluminates. On préfère utiliser des matrices contenant de l'alumine, sous toutes ces formes connues de l'homme du métier, par exemple l'alumine gamma.

Les sources d'élément du groupe VB qui peuvent être utilisées sont bien connues de l'homme du métier. Par exemple, parmi les sources de niobium, on peut utiliser les oxydes, tel que le pentaoxyde de diniobium $Nb_2O_5$, l'acide niobique $Nb_2O_5.H_2O$, les hydroxydes de niobium et les polyoxoniobates, les alkoxydes de niobium de formule $Nb(OR_1)_3$ où $R_1$ est un radical alkyle, l'oxalate de niobium $NbO(HC_2O_4)_5$, le niobate d'ammonium. On utilise de préférence l'oxalate de niobium ou le niobate d'ammonium.

La source de soufre peut être le soufre élémentaire, le sulfure de carbone, l'hydrogène sulfuré, les hydrocarbures soufrés tels que le diméthyl sulfure, le diméthyl disulfure, les mercaptans, les composés du thiophène, les thiols, les polysulfures tels que par exemple le ditertiononylpolysulfure ou TPS-37 de la société ATOCHEM, les coupes pétrolières riches en soufre telles que l'essence, le kérosène, le gazole, seuls ou en mélanges avec un des composés soufrés cité ci-dessus. La source de soufre préférée est le sulfure de carbone ou l'hydrogène sulfuré.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle Si(OEt)4, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut également être ajouté par exemple par imprégnation d'un composé du silicium de type silicone mis en suspension dans l'eau.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple au moyen d'une solution d'acide borique dans un mélange eau/alcool.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF4$ ou de sodium $Na_2SiF_6$. Le fluor peut être introduit par exemple par imprégnation d'une solution aqueuse d'acide fluorhydrique ou de fluorure d'ammonium.

Les sources d'éléments du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Les sources d'éléments du groupe VIII qui peuvent être utilisées sont bien connues de l'homme du métier. Par exemple, pour les métaux non nobles on utilisera les nitrates, les sulfates, les phosphates, les halogénures par exemple, chlorures, bromures et fluorures, les carboxylates par exemple acétates et carbonates. Pour les métaux nobles on utilisera les halogénures, par exemple les chlorure, les nitrates, les acides tels que l'acide chloroplatinique, les oxychlorures tels que l'oxychlorure ammoniacal de ruthénium.

Les catalyseurs obtenus par la présente invention sont mise en forme sous la forme de grains de différentes forme et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre 50 et 600 m2/g, un volume poreux mesuré par porosimétrie au mercure compris entre 0,2 et 1,5 cm$^3$/g et une distribution en taille de pores pouvant être monomodale, bimodale ou polymodale.

Les catalyseurs obtenus par la présente invention sont utilisés pour l'hydrocraquage de charges hydrocarbonées telles que les coupes pétrolières. Les charges employées dans le procédé sont des essences, des kérosènes, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent des hétéroatomes tels que soufre, oxygène et azote et éventuellement des métaux.

Les catalyseurs ainsi obtenus sont utilisés avantageusement pour l'hydrocraquage en particulier de coupes hydrocarbonées lourdes de type distillats sous vide, résidus désasphaltés ou hydrotraités ou équivalents. Les coupes lourdes sont de préférence constituées d'au moins de 80% en volume de composés dont les points d'ébullition sont d'au moins 350°C et de préférence compris entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et préférentiellement comprise entre 250°C et 480°C. La pression est supérieure à 0,1 MPa et préférentiellement supérieure à 1 MPa. Le taux de recyclage d'hydrogène est au minimum de 50 et souvent compris entre 80 et 5000 normaux litres d'hydrogène par litre de charge. La vitesse volumique horaire est comprise en général entre 0,1 et 20 volume de charge par volume de catalyseur et par heure.

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur d'hydrocraquage, soit ex-situ.

Une méthode de sulfuration classique bien connue de l'homme du métier consiste à chauffer en présence d'hydrogène sulfuré à une température comprise entre 150 et 800°C, de préférence entre 250 et 600°C, généralement dans une zone réactionnelle à lit traversé.

Le catalyseur de la présente invention peut être avantageusement employé pour l'hydrocraquage de coupes de type distillats sous vide fortement chargée en soufre et azote plus particulièrement par exemple, les coupes à teneur en soufre supérieure à 0,1% poids et à teneur en azote supérieure à 10 ppm.

Dans un premier mode de réalisation ou d'hydrocraquage partiel encore appelé hydrocraquage doux, le niveau de conversion est inférieur à 55%. Le catalyseur selon l'invention est alors employé à une température en général supérieure ou égaie à 230°C, de préférence comprise entre 300°C et 480°C, et de manière plus préférée comprise entre 350°C et 450°C. La pression préférentiellement supérieure à 2MPa, de manière plus préférée 3MPa, et préférentiellement inférieure à 12MPa, de manière plus préférée inférieure à 10MPa. La quantité d'hydrogène est au minimum de 100 normaux litre d'hydrogène par litre de charge, et préférentiellement comprise entre 200 et 3000 normaux litre d'hydrogène par litre de charge. La vitesse volumique horaire est préférentiellement comprise entre 0,15 et 10 volume de charge par volume de catalyseur et par heure. Dans ces conditions, les catalyseurs de la présente invention présentent une meilleure activité en conversion, en hydrodésulfuration et en hydrodéazotation que les catalyseurs commerciaux.

Dans un deuxième mode de réalisation, le catalyseur de la présente invention peut être employé pour l'hydrocraquage partiel, avantageusement dans des conditions de pression d'hydrogène modérée, de coupes par exemple de type distillats sous vide fortement chargées en soufre et azote qui ont été préalablement hydrotraitées. Dans ce mode d'hydrocraquage le niveau de conversion est inférieur à 55%. Dans ce cas le procédé de conversion de coupe pétrolière se déroule en deux étapes, les catalyseurs selon l'invention étant utilisés dans la deuxième étape. Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice est une matrice minérale poreuse amorphe ou mal cristallisée de type oxyde. On peut citer à titre d'exemple non limitatif les alumines, les silices, les silice-alumine. On peut choisir également les aluminates. On préfère utiliser des matrices contenant de l'alumine, sous toutes ces formes connues de l'Homme du métier, et de manière encore plus préférée les alumines, par exemple l'alumine gamma. La fonction d'hydrotraitement est assurée par au moins un métal ou composé de métal du groupe VIII tels que le nickel et le cobalt notamment. On peut utiliser une combinaison d'au moins un métal ou composé de métal du groupe VIB (par exemple le molybdène ou le tungstène) et d'au moins un métal ou composé de métal du groupe VIII (par exemple le cobalt ou le nickel) de la classification périodique des éléments. La concentration totale en oxydes de métaux des groupes VIB et VIII est préférentiellement comprise entre 5 et 40 % en poids et de manière plus préférée entre 7 et 30 % en poids et le rapport pondéral exprimé en oxyde du métal (des métaux) du groupe VIB sur oxyde du métal (des métaux) du groupe VIII est préférentiellement compris entre 1,25 et 20, et de manière plus préférée entre 2 et 10. De plus, ce catalyseur peut contenir du phosphore. La teneur en phosphore, exprimée en concentration en pentaoxyde de diphosphore $P_2O_5$ sera préférentiellement d'au plus 15%, de manière plus préférée comprise entre 0,1 et 15 % en poids et de manière très préférée comprise entre 0,15 et 10% en poids. Il peut également contenir du bore dans un rapport B/P préférentiellement compris entre 1,05 et 2 (atomique), la somme des teneurs en bore(B) et phosphore (P) exprimée en oxydes étant préférentiellement comprise entre 5 et 15 % poids.

La première étape se déroule généralement à une température comprise entre 350 et 460°C, de préférence entre 360 et 450°C, une pression totale d'au moins 2MPa, de préférence au moins 3 MPa, une vitesse volumique horaire comprise entre de 0,1 et 5 volume de charge par volume de catalyseur et par heure, de préférence entre 0, 2 et 2 volume de charge par volume de catalyseur et par heure et avec une quantité d'hydrogène d'au moins 100 normaux litres par litre de charge, et de préférence comprise entre 260 et 3000 normaux litres par litre de charge.

Pour l'étape de conversion avec le catalyseur selon l'invention (ou seconde étape), les températures sont en général supérieures ou égales à 230°C et souvent comprises entre 300°C et 480°C et de manière préférée entre 300 et 450°C. La pression est en général d'au moins 2MPa et de préférence d'au moins 3MPa. La quantité d'hydrogène est au minimum de 100 litres d'hydrogène de charge et préférentiellement comprise entre 200 et 3000 litres d'hydrogène par litre de charge. La vitesse volumique horaire est préférentiellement comprise entre 0,15 et 10 volume de charge par volume de catalyseur et par heure. Dans ces conditions, les catalyseurs de la présente invention présentent une meilleure activité en conversion, en hydrodésulfuration, en hydrodéazotation et une meilleure sélectivité en distillats moyens que les catalyseurs commerciaux. La durée de vie des catalyseurs est également améliorée dans la plage de pression modérée.

Dans un autre mode de réalisation, le catalyseur de la présente invention peut être employé pour l'hydrocraquage dans des conditions de pression d'hydrogène élevées d'au moins 5 MPa. Les coupes traitées sont par exemple de type distillats sous vide fortement chargée en soufre et azote qui ont été préalablement hydrotraitées. Dans ce mode d'hydrocraquage le niveau de conversion est supérieur à 55%. Dans ce cas, le procédé de conversion de coupe pétrolière se déroule en deux étapes, le catalyseur selon l'invention étant utilisé dans la deuxième étape.

Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice peut également être constituée de, ou renfermer, de la silice, de la silice-alumine, de l'oxyde de bore, de la magnésie, de la zircone, de l'oxyde de titane ou une combinaison de ces oxydes. La fonction hydro-deshydrogénante est assurée par au moins un métal ou composé de métal du groupe VIII tels que le nickel et le cobalt notamment. On peut utiliser une combinaison d'au moins un métal ou composé de métal du groupe VIB (par exemple le molybdène ou le tungstène) et d'au moins un métal ou composé de métal du groupe VIII (par exemple le cobalt ou le nickel) de la classification périodique des éléments. La concentration totale en oxydes de métaux des groupes VIB et VIII est préférentiellement comprise entre 5 et 40 % en poids et de manière plus préférée entre 7 et 30 % en poids et le rapport pondéral exprimé en oxyde métallique en métal (ou métaux) du groupe VIB sur métal (ou métaux) du groupe VIII est préférentiellement compris entre 1,25 et 20 et de manière plus préférée entre 2 et 10. De plus, ce catalyseur peut éventuellement contenir du phosphore. La teneur en phosphore, exprimée en concentration en pentaoxyde de diphosphore $P_2O_5$ sera préférentiellement d'au plus 15% de manière plus préférée comprise entre 0,1 et 15 % en poids et de manière très préférée comprise entre 0,15 et 10% en poids. Il peut également contenir du bore dans un rapport B/P préférentiellement compris entre 1,02 et 2 (atomique), la somme des teneurs en bore (B) et en phosphore (P) exprimée en oxydes étant préférentiellement comprise entre 5 et 15 % poids.

La première étape se déroule généralement à une température comprise entre 350 et 460°C, de préférence entre 360 et 450°C, une pression d'au moins 2MPa, de préférence d'au moins 3MPa, une vitesse volumique horaire comprise entre 0,1 et 5 volume de charge par volume de catalyseur et par heure, de préférence entre 0,2 et 2 volume de charge par volume de catalyseur et par heure et avec une quantité d'hydrogène d'au moins 100 normaux litres d'hydrogène par litre de charge, et de préférence comprise entre 260 et 3000 normaux litres d'hydrogène par litre de charge.

Pour l'étape de conversion avec le catalyseur selon l'invention (ou seconde étape), les températures sont en général supérieures ou égales à 230°C, souvent comprises entre 300°C et 480°C, et de manière préférée entre 330°C et 440°C. La pression est en général supérieure à 5MPa et de préférence supérieure à 7MPa. La quantité d'hydrogène est au minimum de 100 litres d'hydrogène par litre de charge et préférentiellement comprise entre 200 et 3000 litres d'hydrogène par litre de charge. La vitesse volumique horaire est préférentiellement comprise entre 0,15 et 10 volume de charge par volume de catalyseur et par heure.

Dans ces conditions, les catalyseurs de la présente invention présentent une meilleure activité en conversion que les catalyseurs commerciaux, même pour des teneurs en zéolithe considérablement plus faibles que celles des catalyseurs commerciaux. Les exemples suivants illustrent la présente invention sans toutefois en limiter la portée.

Exemple 1 : Préparation d'un support de catalyseur d'hydrocraquage contenant une zéolithe NU-85

Un support de catalyseur d'hydrocraquage contenant une zéolithe NU-85 a été fabriqué en grande quantité de façon à pouvoir préparer différents catalyseurs à base du même support. La matière première utilisée est une zéolithe NU-85, qui est préparée selon l'exemple 4 du brevet EP 462 745 A2 et possède un rapport Si/Al atomique global égal à 13,1 et un rapport atomique Na/Al égal 0,23.

Cette zéolithe NU-85 subit tout d'abord une calcination dite sèche à 550°C sous flux d'air sec durant 20 heures. Puis le solide obtenu est soumis à quatre échanges ioniques dans une solution de $NH_4NO_3$ 10N, à environ 100°C pendant 4 heures pour chaque échange. Le solide ainsi obtenu est référencé $NH_4$-NU-85/1 et possède un rapport Si/Al égal à 13,8 et un rapport Na/Al égal à 0,005. Ses autres caractéristiques physico-chimiques sont regroupées dans le tableau 1.

Tableau 1

| Echantillon | Adsorption | |
|---|---|---|
| | $S_{BET}$ (m²/g) | V(P/P$_o$ = 0,19) ml $N_2$ liquide/g |
| $NH_4$-NU-85/1 | 436 | 0,18 |

18,6 grammes de zéolithe $NH_4$-NU-85/1, préparée précédemment sont dans un premier temps mélangées puis malaxées avec 81,4 grammes d'une matrice composée de boehmite tabulaire ultrafine ou gel d'alumine commercialisée sous le nom SB3 par la société Condéa Chemie Gmbh. Ce mélange de poudre est ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm.

Exemple 2 : Préparation d'un support contenant une zéolithe NU-86

Un support de catalyseur d'hydrocraquage contenant une zéolithe NU-86 a été fabriqué en grande quantité de façon à pouvoir préparer différents catalyseurs à base du même support. La matière première utilisée est une zéolithe NU-86, qui est préparée selon l'exemple 2 du brevet EP 0 463 768 A2 et possède un rapport Si/Al atomique global égal à 10,2 et un rapport atomique Na/Al égal 0,25.

Cette zéolithe NU-86, brute de synthèse, subit tout d'abord une calcination dite sèche à 550°C sous flux d'air sec durant 9 heures. Puis le solide obtenu est soumis à quatre échanges ioniques dans une solution de $NH_4NO_3$ 10N, à environ 100°C pendant 4 heures pour chaque échange. Le solide ainsi obtenu est référencé NH4-NU-86/1 et possède un rapport Si/Al = 10,4 et un rapport Na/Al = 0,013. Ses autres caractéristiques physico-chimiques sont regroupées dans le tableau 2.

Tableau 2

| Echantillon | Diffraction X Cristallinité (%) | Adsorption | |
|---|---|---|---|
| | | $S_{BET}$ (m²/g) | $V(P/P_o = 0,19)$ ml $N_2$ liquide/g |
| NH4-NU-86/1 | 100 | 423 | 0,162 |

Les cristallites de la zéolithe NU-86 se présentent sous forme de cristaux dont la taille varie de 0,4 $\mu$m à 2 $\mu$m.

Ensuite, 19,5 g de la zéolithe $NH_4$-NU-86/2 sont mélangés à 80,5 g d'une matrice composée de boehmite tabulaire ultrafine ou gel d'alumine commercialisée sous le nom SB3 par la société Condéa Chemie Gmbh. Ce mélange de poudre est ensuite mélangé à une solution aqueuse contenant de l'acide nitrique à 66% poids ( 7% poids d'acide par gramme de gel sec) puis malaxé pendant 15 minutes. La pâte malaxée est ensuite extrudée à travers une filière de diamètre 1,4 mm. Les extrudés sont ensuite calcinés à 500°C durant 2 heures sous air .

Exemple 3 : Préparation d'un support de catalyseur d'hydrocraquage contenant une zéolithe NU-87

La matière première utilisée est une zéolithe NU-87, qui possède un rapport atomique Si/Al global égal à 17,2, une teneur pondérale en sodium correspondant à un rapport atomique Na/Al égal à 0,144. Cette zéolithe NU-87 a été synthétisée d'après l'exemple 1 de la demande de brevet européen EP-A-0.377.291.

Cette zéolithe NU-87 subit tout d'abord une calcination dite sèche à 550°C sous flux d'air sec durant 6 heures. Puis le solide obtenu est soumis à quatre échanges ioniques dans une solution de $NH_4NO_3$ 10N, à environ 100°C pendant 4 heures pour chaque échange. Le solide ainsi obtenu est référencé NH4-NU-87 et possède un rapport Si/Al = 17,4 et un rapport Na/Al=0,002. Ses autres caractéristiques physico-chimiques sont regroupées dans le tableau 3.

Tableau 3

| Echantillon | Diffraction X : Paramètres | | | | | | Adsorption | |
|---|---|---|---|---|---|---|---|---|
| | a (Å) | b (Å) | c (Å) | β (°) | V (Å³) | Crist.[1] (%) | $S_{BET}$ (m²/g) | V[2] |
| NH4-NU-87 | 14,35 | 22,34 | 25,14 | 151,53 | 3840 | 100 | 466 | 0,19 |

[1] Cristallinité,

[2] V à P/Po=0,19 en ml N2 liquide/g

Un support de catalyseur d'hydrocraquage contenant une zéolithe NU-87 est fabriqué de la façon suivante : on utilise 20 % poids d'une zéolithe NU-87 que l'on mélange à 80 % poids d'alumine de type SB3 fournie par la société Condéa. La pâte malaxée est ensuite extrudée à travers une filière de diamètre 1,4 mm. Les extrudés sont ensuite séchés une nuit à 120°C sous air puis calcinés à 550°C sous air.

Exemple 4 : Préparation de catalyseurs d'hydrocraquage contenant une zéolithe NU-85

Les extrudés de support préparé dans l'exemple 1 sont imprégnés à sec par une solution d'un mélange d'heptamolybdate d'ammonium et de nitrate de nickel, et enfin calcinés sous air à 550 °C in-situ dans le réacteur. Les teneurs pondérales en oxydes du catalyseur NiMo1 obtenu sont indiquées dans le tableau 4.

Les extrudés de support de l'exemple 1 sont également imprégnés à sec par une solution d'un mélange d'heptamolybdate d'ammonium, de nitrate de nickel et d'acide orthophosphorique, et enfin calcinés sous air à 550 °C in-situ dans le réacteur. Les teneurs pondérales en oxydes du catalyseur NiMo1 P obtenus sont indiquées dans le tableau 4.

Nous avons imprégné l'échantillon de catalyseur NiMo1P décrit ci-dessus par une solution aqueuse renfer-

**EP 0 980 708 B1**

mant du biborate d'ammonium et l'émulsion de silicone Rhodorsil EP1 de manière à déposer environ 1,8 % poids de B2O3 et environ 1,6% poids de SiO2. Après séchage pendant une nuit à 120°C et calcination à 550°C pendant 2 heures sous air sec on obtient le catalyseur NiMo1PBSi. Les teneurs finales en oxydes des catalyseurs NiMo1 sont indiquées dans le tableau 4.

Les extrudés de support contenant une zéolithe NU-85 de l'exemple 1 sont imprégnés à sec par une solution aqueuse d'heptamolybdate d'ammonium, séchés une nuit à 120°C sous air et enfin calcinés sous air à 550°C. Les teneurs pondérales en oxydes du catalyseur Mo1 obtenus sont indiquées dans le tableau 5.

Le catalyseur Mo1 a ensuite été imprégné par une solution aqueuse renfermant du biborate d'ammonium pour obtenir un dépôt de 1,8 % poids de B2O3. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé Mo1B. De la même manière, on prépare un catalyseur Mo1Si par imprégnation du catalyseur Mo1 par une émulsion de silicone Rhodorsil EP1 (Rhone-Poulenc) de manière à déposer 1,8% poids de SiO2. Les extrudés imprégnés sont ensuite séchés pendant une nuit à 120°C puis calcinés à 550°C pendant 2 heures sous air sec. Enfin, un catalyseur Mo1BSi est obtenu imprégnation du catalyseur Mo1 avec une solution aqueuse renfermant le biborate d'ammonium et l'émulsion de silicone Rhodorsil EP1(Rhone-Poulenc) ) de manière à déposer 1,8 % poids de B2O3 et 1,8% poids de SiO2. Les extrudés imprégnés sont alors séchés pendant une nuit à 120°C puis calcinés à 550°C pendant 2 heures sous air sec.

Les extrudés de support préparé dans l'exemple 1 sont imprégnés à sec par une solution de nitrate de nickel et calcinés sous air à 550 °C de manière à obtenir le catalyseur Ni1 contenant environ 3,9% poids de NiO. Nous avons ensuite imprégné l'échantillon de catalyseur Ni1 par une solution aqueuse renfermant une émulsion de silicone Rhodorsil EP1 de manière à déposer environ 2,3% poids de SiO2. Après séchage pendant une nuit à 120°C et calcination à 550°C pendant 2 heures sous air sec on obtient le catalyseur Ni1Si. Enfin, on ajoute à ce catalyseur du fluor par imprégnation d'une solution d'acide fluorhydrique diluée de manière à déposer environ 1,1 % en poids de fluor. Après séchage pendant une nuit à 120°C et calcination à 550°C pendant 2 heures sous air sec on obtient le catalyseur Ni1SiF. Les teneurs finales en oxydés des catalyseurs Ni1 sont indiquées dans le tableau 6.

Exemple 5 : Préparation de catalyseurs d'hydrocraquage contenant une zéolithe NU-85 et du niobium

Des catalyseurs de l'exemple 4 ci-dessus sont imprégnés par une solution aqueuse d'oxalate de niobium Nb $(HC_2O_4)_5$, d'acide oxalique et d'oxalate d'ammonium. La solution aqueuse contenant le niobium est préparée à partir d'un volume d'un litre d'eau dans lequel on dissous 30g d'acide oxalique, 33 g d'oxalate d'ammonium. Lorsque la solution est limpide on chauffe la dite solution à 55°C et on ajoute de l'oxalate de niobium en quantité nécessaire pour déposer la teneur souhaitée sur le catalyseur. Par exemple 92,3 g d'oxalate de niobium dans 1330 ml de la solution d'acide oxalique et oxalate d'ammonium permet de déposer environ 4% poids de niobium sur le catalyseur.

Ces catalyseurs sont imprégnés par la méthode dite avec excès de solution. Les 1330 ml de solution sont mis en contact avec 380 g de catalyseur. A bout de deux heures on récupère les extrudés. Ceux-ci sont ensuite séchés une nuit à 120°C sous un courant d'air sec.

Les teneurs finales en oxydes des catalyseurs NiMo1Nb obtenus à partir des catalyseurs NiMo1 sont indiquées dans le tableau 4.

Les teneurs finales en oxydes des catalyseurs Mo1Nb obtenus à partir des catalyseurs Mo1 sont indiquées dans le tableau 5 et celles des catalyseurs Ni1Nb obtenus à partir des catalyseurs Ni1 sont reportées dans le tableau 6.

Néanmoins, pour obtenir le catalyseur Ni1NbSiF, on ajoute le fluor par imprégnation d'une solution d'acide fluorhydrique diluée sur le catalyseur Ni1NbSi de manière à déposer environ 1 % en poids de fluor. Après séchage pendant une nuit à 120°C et calcination à 550°C pendant 2 heures sous air sec on obtient le catalyseur Ni1NbSiF.

Tableau 4 :

| Caractéristiques des catalyseurs NiMo1 et NiMo1Nb contenant de la zéolithe NU-85 | | | | | |
|---|---|---|---|---|---|
| Catalyseur | NiMo1 | NiMo1 Nb | NiMo1 P | NiMo1 PBSi | NiMo1 NbPBSi |
| MoO$_3$(% pds) | 14,3 | 13,4 | 13,7 | 13,2 | 12,4 |
| Nb2O5 (% pds) | 0 | 6,8 | 0 | 0 | 6,5 |
| NiO (% pds) | 3,1 | 2,9 | 2,9 | 2,8 | 2,6 |
| P$_2$O$_5$ (% pds) | 0 | 0 | 4,8 | 4,7 | 4,4 |
| B$_2$O$_3$ (% pds) | 0 | 0 | 0 | 1,7 | 1,6 |

Tableau 4 : (suite)

| Caractéristiques des catalyseurs NiMo1 et NiMo1Nb contenant de la zéolithe NU-85 | | | | | |
|---|---|---|---|---|---|
| Catalyseur | NiMo1 | NiMo1 Nb | NiMo1 P | NiMo1 PBSi | NiMo1 NbPBSi |
| $SiO_2$ (% pds) global | 14,4 | 13,3 | 13,6 | 14,7 | 13,8 |
| Complément à 100% majoritairement composé de $Al_2O_3$ (% pds) | 68,2 | 63,6 | 65,0 | 62,9 | 58,7 |

Tableau 5 :

| Caractéristiques des catalyseurs Mo1 et Mo1Nb contenant de la zéolithe NU-85 | | | | | | | | |
|---|---|---|---|---|---|---|---|---|
| Catalyseur | Mo1 | Mo1 Nb | Mo1 B | Mo1 NbB | Mo1 Si | Mo1 NbSi | Mo1 BSi | Mo1 NbB Si |
| $MoO_3$ (% pds) | 14,6 | 13,7 | 14,4 | 13,4 | 14,4 | 13,4 | 14,1 | 13,2 |
| $Nb_2O_5$ (% pds) | 0 | 6,5 | 0 | 6,4 | 0 | 6,4 | 0 | 6,3 |
| $P_2O_5$ (% pds) | 0 | 0 | 0 | 0 | 0 | 0 | 0 | 0 |
| $B_2O_3$ (% pds) | 0 | 0 | 1,8 | 0 | 0 | 0 | 1,75 | 1,7 |
| $SiO_2$ (% pds) | 14,8 | 13,8 | 14,5 | 13,6 | 16,1 | 15,3 | 15,9 | 15,0 |
| Complément à 100% majoritairement composé de $Al_2O_3$ (% pds) | 70,6 | 66,0 | 69,3 | 66,6 | 69,5 | 64,9 | 68,2 | 63,8 |

Tableau 6 :

| Caractéristiques des catalyseurs Ni1 et Ni1Nb contenant de la zéolithe NU-85 | | | | | | |
|---|---|---|---|---|---|---|
| Catalyseur | Ni1 | Ni1 Nb | Ni1 Si | Ni1 NbSi | Ni1 SiF | Ni1 Nb SiF |
| NiO (% pds) | 3,9 | 3,7 | 3,8 | 3,6 | 3,7 | 3,6 |
| $Nb_2O_5$ (% pds) | 0 | 4,2 | 0 | 4,4 | 0 | 4,3 |
| F (% pds) | 0 | 0 | 0 | 0 | 1,15 | 1,1 |
| $SiO_2$ (% pds) | 16,7 | 16,0 | 18,6 | 17,8 | 18,4 | 17,6 |
| Complément à 100% majoritairement composé de $Al_2O_3$ (% pds) | 79,4 | 76,1 | 77,6 | 74,2 | 76,7 | 73,4 |

Exemple 6 : Préparation de catalyseurs d'hydrocraquage contenant une zéolithe NU-86

Les extrudés de support de l'exemple 2 sont imprégnés à sec par une solution aqueuse d'un mélange d'heptamolybdate d'ammonium et de nitrate de nickel, séchés une nuit à 120°C sous air et enfin calcinés sous air à 550°C. On obtient ainsi le catalyseur NiMo2.

Les extrudés de support de l'exemple 2 sont imprégnés à sec par une solution d'un mélange d'heptamolybdate d'ammonium, de nitrate de nickel et d'acide orthophosphorique, et enfin calcinés sous air à 550 °C in-situ dans le réacteur On obtient ainsi le catalyseur NiMo2P.

Enfin, un catalyseur NiMo2PBSi a été obtenu par imprégnation du catalyseur NiMo2P selon la même procédure que les catalyseurs ci-dessus mais en utilisant une solution aqueuse renfermant le biborate d'ammonium et l'émulsion de silicone Rhodorsil EP1 de manière à déposer 2,0 % poids de B2O3 et 1,6% poids de SiO2. Après séchage pendant une nuit à 120°C et calcination à 550°C pendant 2 heures sous air sec on obtient le catalyseur NiMo2PBSi. Les teneurs finales en oxydes des catalyseurs NiMo2 sont indiquées dans le tableau 7.

Les extrudés de support contenant une zéolithe NU-86 de l'exemple 2 sont par ailleurs imprégnés à sec par une solution aqueuse d'heptamolybdate d'ammonium, séchés une nuit à 120°C sous air et enfin calcinés sous air à 550°C pour obtenir le catalyseur Mo2. Ce catalyseur est ensuite imprégné par une solution aqueuse renfermant du biborate d'ammonium pour obtenir un dépôt de 2 % poids de B2O3. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé Mo2B. De la même manière, on prépare un catalyseur Mo2Si par imprégnation du catalyseur Mo2 au moyen d'une émulsion de silicone Rhodorsil EP1 (Rhone-Poulenc) de manière à déposer 1,6% poids de SiO2. Les extrudés imprégnés sont séchés pendant une nuit à 120°C puis calcinés à 550°C pendant 2 heures sous air sec. Enfin, un catalyseur Mo2BSi a été obtenu imprégnation du catalyseur Mo2 par une solution aqueuse renfermant le biborate d'ammonium et l'émulsion de silicone Rhodorsil EP1(Rhone-Poulenc) de manière à déposer 2,0 % poids de B2O3 et 1,6% poids de SiO2. Les extrudés imprégnés sont alors séchés pendant une nuit à 120°C puis calcinés à 550°C pendant 2 heures sous air sec.

Exemple 7: Préparation de catalyseurs d'hydrocraquage contenant une zéolithe NU-86 et du niobium

Des catalyseurs de l'exemple 6 ci-dessus sont imprégnés par une solution aqueuse d'oxalate de niobium Nb $(HC_2O_4)_5$, d'acide oxalique et d'oxalate d'ammonium. La solution aqueuse contenant le niobium est préparée à partir d'un volume d'un litre d'eau dans lequel on dissous 30g d'acide oxalique, 33 g d'oxalate d'ammonium. Lorsque la solution est limpide on chauffe la dite solution à 55°C et on ajoute de l'oxalate de niobium en quantité nécessaire pour déposer la teneur souhaitée sur le catalyseur. Par exemple 92,3 g d'oxalate de niobium dans 1330 ml de la solution d'acide oxalique et oxalate d'ammonium permet de déposer environ 4% poids de Niobium sur le catalyseur.

Lesdits catalyseurs sont imprégnés par la méthode dite avec excès de solution. Les 1330 ml de solution sont mis en contact avec 380 g de catalyseur. A bout de deux heures on récupère les extrudés. Ceux-ci sont ensuite séchés une nuit à 120°C sous un courant d'air sec.

Les teneurs finales en oxydes des catalyseurs NiMo2Nb ainsi obtenus sont indiquées dans le tableau 7. Les teneurs finales en oxydes des catalyseurs Mo2Nb ainsi obtenus sont indiquées dans le tableau 8.

Tableau 7 :

| Caractéristiques des catalyseurs NiMo2 et NiMo2Nb contenant de la zéolithe NU-86 | | | | | |
|---|---|---|---|---|---|
| Catalyseur | NiMo2 | NiMo2 Nb | NiMo2 P | NiMo2 PBSi | NiMo2 NbPBSi |
| MoO$_3$ (%pds) | 14,1 | 13,1 | 13,4 | 12,9 | 12,1 |
| Nb$_2$O$_3$ (% pds) | 0 | 6,85 | 0 | 0 | 6,8 |
| NiO (% pds) | 3,2 | 2,9 | 3,1 | 2,9 | 2,8 |
| P$_2$O$_5$ (% pds) | 0 | 0 | 4,1 | 4,0 | 3,7 |
| B$_2$O$_3$ (% pds) | 0 | 0 | 0 | 1,9 | 1,8 |
| SiO$_2$ (% pds) global | 14,7 | 13,7 | 14,1 | 15,2 | 14,1 |
| Complément à 100% majoritairement composé de Al$_2$O$_3$ (% pds) | 68,0 | 63,4 | 65,3 | 63,1 | 58,7 |

Tableau 8 :

| Caractéristiques des catalyseurs Mo2 et Mo2Nb contenant de la zéolithe NU-86 | | | | | | | | |
|---|---|---|---|---|---|---|---|---|
| Catalyseur | Mo2 | Mo2 Nb | Mo2 B | Mo2 NbB | Mo2 Si | Mo2 NbSi | Mo2 BSi | Mo2 NbB Si |
| MoO$_3$ (% pds) | 14,6 | 13,6 | 14,3 | 13,4 | 14,3 | 13,4 | 14,1 | 13,2 |
| N$_2$O$_5$ (% pds) | 0 | 6,35 | 0 | 6,4 | 0 | 6,3 | 0 | 6,4 |
| P$_2$O$_5$ (% pds) | 0 | 0 | 0 | 0 | 0 | 0 | 0 | 0 |
| B$_2$O$_3$ (% pds) | 0 | 0 | 1,8 | 1,9 | 0 | 0 | 1,6 | 1,90 |
| SiO$_2$ (% pds) | 15,2 | 14,2 | 14,9 | 13,9 | 16,6 | 15,5 | 16,1 | 15,1 |

Tableau 8 : (suite)

| Caractéristiques des catalyseurs Mo2 et Mo2Nb contenant de la zéolithe NU-86 | | | | | | | | |
|---|---|---|---|---|---|---|---|---|
| Catalyseur | Mo2 | Mo2 Nb | Mo2 B | Mo2 NbB | Mo2 Si | Mo2 NbSi | Mo2 BSi | Mo2 NbB Si |
| Complément à 100% majoritairement composé de Al$_2$O$_3$ (% pds) | 70,2 | 65,8 | 69,0 | 64,4 | 69,1 | 64,7 | 67,9 | 63,4 |

Exemple 8 : Préparation de catalyseurs d'hydrocraquage contenant une zéolithe NU-87

Les extrudés de support de l'exemple 3 sont imprégnés à sec par une solution aqueuse d'un mélange d'heptamolybdate d'ammonium et de nitrate de nickel, séchés une nuit à 120°C sous air et enfin calcinés sous air à 550°C. On obtient ainsi le catalyseur NiMo3.
Les extrudés de support de l'exemple 3 sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. On obtient ainsi le catalyseur NiMo3P.

L'échantillon de catalyseur NiMo3P est imprégné par une solution aqueuse renfermant du biborate d'ammonium et l'émulsion de silicone Rhodorsil EP1 de manière à déposer 1,8 % poids de B2O3 et 1,5% poids de SiO2.. Après séchage pendant une nuit à 120°C et calcination à 550°C pendant 2 heures sous air sec on obtient le catalyseur NiMo3PBSi. Les teneurs finales en oxydes des catalyseurs NiMo3 sont indiquées dans le tableau 9.

Les extrudés de support contenant une zéolithe NU-87 de l'exemple 3 sont imprégnés à sec par une solution aqueuse d'heptamolybdate d'ammonium, séchés une nuit à 120°C sous air et enfin calcinés sous air à 550°C. On obtient ainsi le catalyseur Mo3. Ce catalyseur est ensuite imprégné par une solution aqueuse renfermant du biborate d'ammonium pour obtenir un dépôt de 1,5 % poids de B2O3. Après maturation à température ambiante dans une atmosphère saturée en eau, les extrudés imprégnés sont séchés pendant une nuit à 120°C puis calcinés à 550°C pendant 2 heures sous air sec. On obtient un catalyseur nommé Mo3B. De la même manière, on a ensuite préparé un catalyseur Mo3Si par imprégnation du catalyseur Mo3 par une émulsion de silicone Rhodorsil EP1 (Rhone-Poulenc) de manière à déposer 1,8% poids de SiO2. Les extrudés imprégnés sont ensuite séchés pendant une nuit à 120°C puis calcinés à 550°C pendant 2 heures sous air sec. Enfin, un catalyseur Mo3BSi a été obtenu imprégnation du catalyseur Mo3 par une solution aqueuse renfermant le biborate d'ammonium et l'émulsion de silicone Rhodorsil EP1 (Rhone-Poulenc) de manière à déposer 1,5 % poids de B2O3 et 1,8% poids de SiO2. Les extrudés imprégnés sont alors séchés pendant une nuit à 120°C puis calcinés à 550°C pendant 2 heures sous air sec.

Exemple 9 : Préparation de catalyseurs d'hydrocraquage contenant une zéolithe NU-87 et du niobium

Des catalyseurs de l'exemple 8 ci-dessus sont imprégnés par une solution aqueuse d'oxalate de niobium Nb (HC$_2$O$_4$)$_5$, d'acide oxalique et d'oxalate d'ammonium. La solution aqueuse contenant le niobium est préparée à partir d'un volume d'un litre d'eau dans lequel on dissous 30g d'acide oxalique, 33 g d'oxalate d'ammonium. Lorsque la solution est limpide on chauffe la dite solution à 55°C et on ajoute de l'oxalate de niobium en quantité nécessaire pour déposer la teneur souhaitée sur le catalyseur. Par exemple 92,3 g d'oxalate de niobium dans 1330 ml de la solution d'acide oxalique et oxalate d'ammonium permet de déposer environ 4% poids de niobium sur le catalyseur.

Ces catalyseurs sont imprégnés par la méthode dite avec excès de solution. Les 1330 ml de solution à la concentration en Niobium désirée sont mis en contact avec 380 g de catalyseur. A bout de deux heures on récupère les extrudés. Ceux-ci sont ensuite séchés une nuit à 120°C sous un courant d'air sec.

Les teneurs finales en oxydes des catalyseurs NiMo3Nb et Mo3Nb ainsi obtenus sont indiquées dans les tableaux 9 et 10 respectivement.

Tableau 9 :

| Caractéristiques des catalyseurs NiMo3 et NiMo3Nb contenant de la zéolithe NU-87 | | | | | |
|---|---|---|---|---|---|
| Catalyseur | NiMo3 | NiMo3 Nb | NiMo3 P | NiMo3 PBSi | NiMo3 NbPBSi |
| MoO$_3$ (% pds) | 13,4 | 12,9 | 13,4 | 12,9 | 12,0 |
| Nb$_2$O$_5$ (% pds) | 0 | 7,1 | 0 | 0 | 7,15 |

Tableau 9 :   (suite)

| Caractéristiques des catalyseurs NiMo3 et NiMo3Nb contenant de la zéolithe NU-87 | | | | | |
|---|---|---|---|---|---|
| Catalyseur | NiMo3 | NiMo3 Nb | NiMo3 P | NiMo3 PBSi | NiMo3 NbPBSi |
| NiO (% pds) | 3,1 | 3,0 | 3,1 | 3,0 | 2,8 |
| $P_2O_5$ (% pds) | 0 | 0 | 4,35 | 4,2 | 3,9 |
| $B_2O_3$ (% pds) | 0 | 0 | 0 | 1,7 | 1,6 |
| $SiO_2$ (% pds) global | 14,8 | 13,8 | 14,3 | 15,3 | 14,1 |
| Complément à 100% (majoritairement composé de $Al_2O_3$ (% pds) | 68,7 | 63,2 | 64,8 | 62,9 | 58,4 |

Tableau 10 :

| Caractéristiques des catalyseurs Mo3 et Mo3Nb contenant de la zéolithe NU-87 | | | | | | | | |
|---|---|---|---|---|---|---|---|---|
| Catalyseur | Mo3 | Mo3 Nb | Mo3 B | Mo3 Nb B | Mo3 Si | Mo3 Nb Si | Mo3 BSi | Mo3 Nb BSi |
| $MoO_3$ (% pds) | 14,3 | 13,3 | 14,0 | 13,1 | 14,0 | 13,1 | 13,8 | 12,9 |
| $Nb_2O_5$ (% pds) | 0 | 6,9 | 0 | 6,7 | 0 | 6,8 | 0 | 6,6 |
| $P_2O_5$ (% pds) | 0 | 0 | 0 | 0 | 0 | 0 | 0 | 0 |
| $B_2O_3$ (% pds) | 0 | 0 | 1,9 | 1,45 | 0 | 0 | 1,8 | 1,4 |
| $SiO_2$ (% pds) | 15,4 | 14,3 | 15,1 | 14,2 | 16,6 | 15,7 | 16,3 | 15,5 |
| Complément à 100% composé majoritairement de $Al_2O_3$ (% pds) | 70,3 | 65,5 | 69,0 | 64,6 | 69,4 | 64,4 | 68,1 | 63,6 |

Exemple 10 : Comparaison des catalyseurs en hydrocraquage d'un gazole sous vide à conversion partielle.

Les catalyseurs dont les préparations sont décrites dans les exemples précédents sont utilisés dans des conditions d'hydrocraquage à pression modérée sur une charge pétrolière dont les principales caractéristiques sont les suivantes :

| | |
|---|---|
| Densité (20/4) | 0,921 |
| Soufre (% poids) | 2,46 |
| Azote (ppm poids) | 1130 |
| Distillation simulée point initial | 365°C |
| point 10 % | 430°C |
| point 50 % | 472°C |
| point 90 % | 504°C |
| point final | 539°C |
| point d'écoulement | + 39°C |

L'unité de test catalytique comprend deux réacteurs en lit fixe, à circulation ascendante de la charge ("up-flow). Dans le premier réacteur, celui dans lequel la charge passe en premier, on introduit le catalyseur de première étape d'hydrotraitement HTH548 vendu par la société Procatalyse comprenant un élément du groupe VI et un élément du groupe VIII déposés sur alumine. Dans le second réacteur, celui dans lequel la charge passe en dernier, on introduit un catalyseur d'hydrocraquage décris ci-dessus. Dans chacun des réacteurs, on introduit 40 ml de catalyseur. Les deux réacteurs fonctionnement à la même température et à la même pression. Les conditions opératoires de l'unité de test sont les suivantes :

| Pression totale | 5 MPa |
|---|---|
| Catalyseur d'hydrotraitement | 40 cm³ |
| Catalyseur d'hydrocraquage | 40 cm³ |
| Température | 400°C |
| Débit d'hydrogène | 20 l/h |
| Débit de charge | 40 cm³/h |

Les deux catalyseurs subissent une étape de sulfuration in-situ avant réaction. Une fois la sulfuration réalisée, la charge décrite ci-dessus peut être transformée.

Les performances catalytiques sont exprimées par la conversion brute à 400°C (CB), par la sélectivité brute en distillats moyens (SB) et par les conversions en hydrodésulfuration (HDS) et en hydrodéazotation (HDN). Ces performances catalytiques sont mesurées sur le catalyseur après qu'une période de stabilisation, généralement d'au moins 48 heures, ait été respectée.

La conversion brute CB est prise égale à :

$$CB = \% \text{ pds de } 380°C^{\text{moins}} \text{ de l'effluent}$$

$380°C^{\text{moins}}$ représentant la fraction distillée à une température inférieure ou égale à 380°C.

La sélectivité brute SB en distillats moyens est prise égale à :

$$SB = 100*\text{poids de la fraction } (150°C\text{-}380°C)/\text{poids de la fraction } 380°C^{\text{moins}} \text{ de l'effluent}$$

La conversion en hydrodésulfuration HDS est prise égale à :

$$HDS = (S_{initial} - S_{effluent}) / S_{initial} * 100 = (24600 - S_{effluent}) / 24600 * 100$$

La conversion en hydrodéazotation HDN est prise égale à :

$$HDN = (N_{initial} - N_{effluent}) / N_{initial} * 100 = (1130 - N_{effluent}) / 1130 * 100$$

Dans les tableaux suivant, nous avons reporté la conversion brute CB à 400°C, la sélectivité brute SB, la conversion en hydrodésulfuration HDS et la conversion en hydrodéazotation HDN pour les catalyseurs.

Tableau 11 :

| Activités catalytiques des catalyseurs NiMo1 à base de NU-85 en hydrocraquage partiel à 400°C | | | | |
|---|---|---|---|---|
| Catalyseurs | CB (%pds) | SB | HDS (%) | HDN (%) |
| NiMo1 | 45,5 | 70,8 | 99,01 | 94,2 |
| NiMo1Nb | 46,3 | 70,5 | 99,15 | 95,1 |
| NiMo1P | 45,8 | 70,1 | 99,33 | 95,9 |
| NiMo1PBSi | 48,1 | 70,1 | 99,61 | 98,6 |
| NiMo1NbPBSi | 49,1 | 70,3 | 99,74 | 98,7 |

Tableau 12 :

| Activités catalytiques des catalyseurs NiMo2 à base de NU-86 en hydrocraquage partiel à 400°C | | | | |
|---|---|---|---|---|
| Catalyseurs | CB (%pds) | SB | HDS (%) | HDN (%) |
| NiMo2 | 49,6 | 59,7 | 98,7 | 95,7 |

Tableau 12 :   (suite)

| Activités catalytiques des catalyseurs NiMo2 à base de NU-86 en hydrocraquage partiel à 400°C | | | | |
|---|---|---|---|---|
| Catalyseurs | CB (%pds) | SB | HDS (%) | HDN (%) |
| NiMo2Nb | 50,1 | 60,2 | 98,9 | 96,5 |
| NiMo2P | 49,7 | 59,5 | 98,3 | 95,5 |
| NiMo2PBSi | 50,2 | 59,9 | 99,6 | 97,9 |
| NiMo2NbPBSi | 50,8 | 60,1 | 99,75 | 98,3 |

Tableau 13 :

| Activités catalytiques des catalyseurs NiMo3 à base de NU-87 en hydrocraquage partiel à 400°C | | | | |
|---|---|---|---|---|
| Catalyseurs | CB (%pds) | SB | HDS (%) | HDN (%) |
| NiMo3 | 47,7 | 68,1 | 98,6 | 95,0 |
| NiMo3Nb | 48,1 | 68,3 | 98,7 | 96,5 |
| NiMo3P | 47,8 | 68,2 | 99,1 | 95,3 |
| NiMo3PBSi | 49,1 | 68,9 | 99,4 | 98,1 |
| NiMo3NbPBSi | 49,5 | 68,0 | 99,7 | 98,6 |

Les résultats des tableaux 11, 12 et 13 montrent que l'ajout de niobium, de bore et de silicium aux catalyseurs à base de nickel et de molybdène supporté sur les supports contenant de l'alumine et une zéolithe NU-85, NU-86 et NU-87 apporte une amélioration des performances du catalyseur en conversion quelque soit la zéolithe, c'est à dire des conversions plus élevées pour une même température réaction de 400°C. Les catalyseurs selon l'invention sont donc particulièrement intéressants pour l'hydrocraquage partiel de charge de type distillats sous vide contenant de l'azote à une pression d'hydrogène modérée.

Exemple 11 : Comparaison des catalyseurs en hydrocraquage d'un gazole sous vide à haute conversion

Les catalyseurs dont les préparations sont décrites aux exemples précédents sont utilisés dans les conditions de l'hydrocraquage à conversion élevée (60-100%). La charge pétrolière est un distillat sous vide hydrotraité dont les principales caractéristiques sont les suivantes :

| | |
|---|---|
| Densité (20/4) | 0,869 |
| Soufre (ppm poids) | 502 |
| Azote (ppm poids) | 10 |
| Distillation simulée point initial | 298 °C |
| point 10 % | 369 °C |
| point 50 % | 427 °C |
| point 90 % | 481 °C |
| point final | 538 °C |

Cette charge a été obtenue par hydrotraitement d'un distillat sous vide sur un catalyseur HR360 vendu par la société Procatalyse comprenant un élément du groupe VIB et un élément du groupe VIII déposés sur alumine.
On ajoute à la charge 0,6% poids d'aniline et 2% poids de diméthyl-disulfure afin de simuler les pressions partielles d'$H_2S$ et d'$NH_3$ présente dans la deuxième étape d'hydrocraquage. La charge ainsi préparée est injectée dans l'unité de test d'hydrocraquage qui comprend un réacteur en lit fixe, à circulation ascendante de la charge ("up-flow"), dans lequel est introduit 80 ml de catalyseur. Le catalyseur est sulfuré par un mélange n-hexane/DMDS + aniline jusqu'à 320 °C. Une fois la sulfuration réalisée, la charge décrite ci-dessus peut être transformée. Les conditions opératoires de l'unité de test sont les suivantes :

| Pression totale | 9 MPa |
|---|---|
| Catalyseur | 80 cm³ |
| Température | 360-420°C |
| Débit d'hydrogène | 80 l/h |
| Débit de charge | 80 cm³/h |

Les performances catalytiques sont exprimées par la température qui permet d'atteindre un niveau de conversion brute de 70 % et par la sélectivité brute en distillats moyen 150-380°C. Ces performances catalytiques sont mesurées sur le catalyseur après qu'une période de stabilisation, généralement au moins 48 heures, ait été respectée.

La conversion brute CB est prise égale à :

$$CB = \% \text{ pds de } 380°C^{\text{ moins}} \text{ de l'effluent}$$

La sélectivité brute SB en distillat moyen est prise égale à

$$SB = 100 * \text{poids de la fraction } (150°C\text{-}380°C)/\text{poids de la fraction } 380°C^{\text{ moins}} \text{ de l'effluent}$$

La température de réaction est fixée de façon à atteindre une conversion brute CB égale à 70% poids. Dans les tableaux 14, 15 et 16 suivant, nous avons reporté la température de réaction et la sélectivité brute pour les catalyseurs décrits dans les tableaux 4 à 10.

Tableau 14

| Activités catalytiques des catalyseurs à base de NU-85 en hydrocraquage haute conversion (70%) | | |
|---|---|---|
| | T(°C) | SB |
| NiMo1 | 386 | 31,7 |
| NiMo1P | 385 | 31,7 |
| NiMo 1PBSi | 383 | 32,4 |
| NiMo1NbPBSi | 381 | 32,4 |
| Mo1 | 387 | 29,3 |
| Mo1B | 386 | 29,9 |
| Mo1NbB | 384 | 28,1 |
| Mo1Si | 386 | 30,1 |
| Mo1NbSi | 384 | 28,7 |
| Mo1BSi | 384 | 30,4 |
| Mo1NbBSi | 383 | 30,3 |
| Ni1 | 388 | 28,9 |
| Ni1Si | 388 | 28,1 |
| Ni1NbSi | 386 | 30,3 |
| Ni1SiF | 385 | 29,0 |
| Ni1NbSiF | 384 | 30,6 |

## EP 0 980 708 B1

Tableau 15

| Activités catalytiques des catalyseurs à base de NU-86 en hydrocraquage haute conversion (70%) | | |
|---|---|---|
| | T(°C) | SB |
| NiMo2 | 373 | 36,0 |
| NiMo2P | 371 | 36,2 |
| NiMo2PBSi | 367 | 36,3 |
| NiMo2NbPBSi | 365 | 37,5 |
| Mo2 | 373 | 34,1 |
| Mo2B | 373 | 33,9 |
| Mo2NbB | 371 | 34,7 |
| Mo2Si | 372 | 33,0 |
| Mo2NbSi | 370 | 35,1 |
| Mo2BSi | 371 | 33,6 |
| Mo2NbBSi | 370 | 35,0 |

Tableau 16

| Activités catalytiques des catalyseurs à base de NU-87 en hydrocraquage haute conversion (70%) | | |
|---|---|---|
| | T(°C) | SB |
| NiMo3 | 384 | 30,6 |
| NiMo3P | 383 | 32,5 |
| NiMo3PBSi | 378 | 32,3 |
| NiMo3NbPBSi | 376 | 33,1 |
| Mo3 | 385 | 30,6 |
| Mo3B | 384 | 30,3 |
| Mo3NbB | 382 | 30,4 |
| Mo3Si | 383 | 29,6 |
| Mo3NbSi | 381 | 30,9 |
| Mo3BSi | 383 | 29,1 |
| Mo3NbBSi | 381 | 30,0 |

Les résultats des tableaux 14, 15 et 16 montrent que l'ajout de niobium et/ou de bore et/ou de silicium aux catalyseurs à base de nickel et de molybdène supporté sur les supports contenant de l'alumine et une zéolithe NU-85, NU-86, ou NU-87 (par exemple catalyseurs NiMo1NbPBSi, Mo2NbB ou Mo3NbSi) apporte une amélioration des performances du catalyseur en conversion quelque soit la zéolithe, c'est à dire des températures de conversion plus faible pour atteindre un niveau de conversion de 70% que les catalyseurs non conformes à l'invention (tels que NiMo1, Mo2B ou Mo3Si par exemple). Les catalyseurs de l'invention contenant du niobium sont donc particulièrement intéressants pour l'hydrocraquage de charge de type distillats sous vide contenant de l'azote à une pression d'hydrogène modérée à élevée.

De la même manière on vérifie dans les tableaux 14, 15 et 16 que l'ajout de niobium et/ou de bore et/ou de silicium aux catalyseurs à base de molybdène supporté sur les supports contenant de l'alumine et une zéolithe NU-85, NU-86, ou NU-87 apporte également une amélioration des performances du catalyseur en conversion, quelque soit la zéolithe.

Les catalyseurs de l'invention contenant du niobium et du bore ou du silicium sont donc particulièrement intéressants pour l'hydrocraquage de charge de type distillats sous vide contenant de l'azote à une pression d'hydrogène modérée à élevée.

**Revendications**

1. Catalyseur comprenant au moins une matrice amorphe ou mal cristallisée de type oxyde, au moins un élément du groupe VB, au moins une zéolithe choisie dans le groupe constitué par les zéolithes NU-85, NU-86 et NU-87, et au moins un élément promoteur choisi parmi le bore et le silicium.

2. Catalyseur selon la revendication 1, comprenant en outre du phosphore.

3. Catalyseur selon l'une des revendications 1 ou 2 dans lequel l'élément du groupe VB est le niobium.

4. Catalyseur selon l'une des revendications 1 à 3 comprenant en outre au moins un élément choisi dans le groupe VIB.

5. Catalyseur selon la revendication 4 dans lequel l'élément du groupe VIB est le molybdène ou le tungstène.

6. Catalyseur selon l'une des revendication 1 à 4 comprenant en outre au moins un élément choisi dans le groupe VIII.

7. Catalyseur selon la revendication 6, dans lequel l'élément du groupe VIII est le fer, le cobalt ou le nickel.

8. Catalyseur selon l'une des revendication 1 à 7 comprenant en outre au moins un élément choisi dans le groupe VIIA.

9. Catalyseur selon la revendication 8 dans lequel l'élément du groupe VIIA est le fluor.

10. Catalyseur selon l'une des revendications 1 à 9 renfermant en % poids par rapport à la masse totale du catalyseur :

   - 0,1 à 99,8% d'au moins une zéolithe choisie dans le groupe constitué par les zéolithes NU-85, NU-86, NU-87,
   - 0,1 à 60% d'au moins un élément choisi dans le groupe VB,
   - 0,1 à 99% d'au moins une matrice minérale poreuse amorphe ou mal cristallisée de type oxyde,
   - 0 à 60% d'au moins un métal choisi parmi les éléments du groupe VIB et du groupe VIII,
   - 0,1 à 15% d'au moins un élément promoteur parmi le silicium et le bore, non compris le silicium contenu dans la charpente de la zéolithe,
   - 0 à 20% de phosphore et/ou d'au moins un élément choisi dans le groupe VIIA.

11. Procédé de préparation d'un catalyseur selon l'une des revendications 1 à 10 dans lequel :

   a) on sèche et on pèse un solide dénommé le précurseur, renfermant au moins les composés suivants : au moins une matrice, au moins une zéolithe choisie dans le groupe constitué par les zéolithes NU-85, NU-86, NU-87, éventuellement au moins un élément choisi parmi les éléments du groupe VIB et du groupe VIII, au moins un élément parmi le bore et le silicium, éventuellement du phosphore, et éventuellement au moins un élément du groupe VIIA, le tout étant de préférence mis en forme,

   b) le solide sec obtenu à l'étape a) est calciné à une température d'au moins 150°C.

   c) on imprègne le solide précurseur défini à l'étape b), par une solution contenant au moins un élément du groupe VB.

   d) on laisse reposer le solide humide sous une atmosphère humide à une température comprise entre 10 et 120°C,

   e) on sèche le solide humide obtenu à l'étape b) à une température comprise entre 60 et 150°C,

12. Procédé de préparation d'un catalyseur selon la revendication 11, dans lequel on introduit dans un mélange d'au moins une matrice avec au moins une zéolithe choisie dans le groupe constitué par les zéolithes NU-85, NU-86, NU-87, avant ou après la mise en forme et avant ou après la calcination dudit mélange, au moins un élément,

choisi parmi les éléments du groupe VIII et du groupe VIB.

**13.** Procédé de préparation selon l'une des revendications 11 ou 12, dans lequel on imprégne le catalyseur par au moins une solution contenant au moins un élément choisi par les éléments du groupe VIB et du groupe VIII.

**14.** Procédé de préparation selon l'une des revendications 11 à 13, dans lequel on imprégne le catalyseur par au moins une solution contenant au moins un élément promoteur choisi parmi le silicium et le bore.

**15.** Procédé de préparation selon l'une des revendications 11 à 14 dans lequel on imprégne le catalyseur par au moins une solution contenant au moins un élément choisi par les éléments du groupe VIIA.

**16.** Procédé de préparation d'un catalyseur selon l'une des revendications 11 à 15 dans lequel au moins une calcination est effectuée à l'issue de l'une quelconque des étapes de la préparation, à une température d'au moins 150°C.

**17.** Procédé de préparation selon l'une des revendications 11 à 16 dans lequel on procède à la sulfuration du catalyseur sous flux d'un mélange hydrogène/hydrogène sulfuré ou encore sous hydrogène sulfuré pur, à une température comprise entre 150 et 800°C.

**18.** Utilisation du catalyseur selon l'une des revendications 1 à 10 ou préparé selon l'une des revendications 11 à 17 dans un procédé d'hydrocraquage de charges hydrocarbonnées.

**19.** Utilisation selon la revendication 18 telle que la charge est constituée d'au moins 80% en volume de composés dont les points d'ébullition sont d'au moins 350°C.

**20.** Utilisation selon l'une des revendications 18 ou 19 dans laquelle la température est supérieure à 200°C, la pression supérieure à 0,1 MPa, la quantité d'hydrogène au minimum de 50 litre d'hydrogène par litre de charge, et la vitesse volumétrique horaire comprise entre 0,1 et 20 volume de charge par volume de catalyseur et par heure.

**21.** Utilisation selon l'une des revendications 18 ou 19 dans un procédé d'hydrocraquage doux dans laquelle le niveau de conversion est inférieur à 55%, la température est supérieure à 230°C, la pression supérieure à 2 MPa et inférieure à 12MPa, la quantité d'hydrogène au minimum de 100 litre d'hydrogène par litre de charge, et la vitesse volumétrique horaire comprise entre 0,15 et 10 volume de charge par volume de catalyseur et par heure.

**22.** Utilisation selon l'une des revendications 18 ou 19 dans un procédé d'hydrocraquage, dans laquelle la conversion est supérieure à 55%, la température est supérieure à 230°C, la pression supérieure à 5 MPa, la quantité d'hydrogène au minimum de 100 litre d'hydrogène par litre de charge, et la vitesse volumétrique horaire comprise entre 0,15 et 10 volume de charge par volume de catalyseur et par heure.

**23.** Utilisation selon l'une des revendications 18 à 22 dans laquelle une étape d'hydrotraitement est effectuée préalablement à l'étape d'hydrocraquage.

**24.** Utilisation selon la revendication 23 dans laquelle l'étape d'hydrotraitement est effectuée à une température comprise entre 350°C et 460°C, une pression d'au moins 2 MPa, avec une quantité d'hydrogène d'au moins 100 litre d'hydrogène par litre de charge, et une vitesse volumétrique horaire comprise entre 0,1 et 5 volume de charge par volume de catalyseur et par heure.

**Patentansprüche**

**1.** Katalysator umfassend: wenigstens eine amorphe oder schlecht kristallisierte Matrix vom Typ Oxid, wenigstens ein Element der Gruppe VB, wenigstens einen Zeolithen, der gewählt ist aus der durch die Zeolithe NU-86, NU-87 und NU-87 gebildeten Gruppe und wenigstens ein Promotorelement, das aus Bor und Silizium gewählt ist.

**2.** Katalysator nach Anspruch 1 im übrigen Phosphor umfassend.

**3.** Katalysator nach einem der Ansprüche 1 oder 2, bei dem das Element der Gruppe VB Niob ist.

**4.** Katalysator nach einem der Ansprüche 1 bis 3 im übrigen wenigstens ein aus der Gruppe VIB gewähltes Element umfassend.

**5.** Katalysator nach Anspruch 4, bei dem das Element der Gruppe VIB Molybdän oder Wolfram ist.

**6.** Katalysator nach einem der Ansprüche 1 bis 4 im übrigen wenigstens ein aus der Gruppe VIII gewähltes Element umfassend.

**7.** Katalysator nach Anspruch 6, bei dem das Element der Gruppe VIII Eisen, Kobalt oder Nickel ist.

**8.** Katalysator nach einem der Ansprüche 1 bis 7 im übrigen wenigstens ein aus der Gruppe VIIA gewähltes Element umfassend.

**9.** Katalysator nach Anspruch 8, bei dem das Element der Gruppe VIIA Fluor ist.

**10.** Katalysator nach einem der Ansprüche 1 bis 9 in Gew.-%, bezogen auf die Gesamtmasse des Katalysators, einschließend:

a. 0,1 bis 99,8 % wenigstens eines Zeolithen gewählt aus der durch die Zeolithe NU-85, NU-86, NU-87 gebildeten Gruppe,

b. 0,1 bis 60 % wenigstens eines aus der Gruppe VB gewählten Elementes,

c. 0,1 bis 99 % wenigstens einer porösen amorphen oder schlecht kristallisierten mineralischen Matrix vom Oxidtyp,

d. 0 bis 60 % wenigstens eines Metalls, das aus den Elementen der Gruppe VIB und der Gruppe VIII gewählt wurde,

e. 0,1 bis 15 % wenigstens eines Promotorelements aus Silizium und Bor, nicht gezählt das im Zeolithgitter enthaltene Silizium und

f. 0 bis 20 % Phosphor und/oder wenigstens ein aus der Gruppe VIIA gewähltes Element.

**11.** Verfahren zur Herstellung eines Katalysators nach einem der Ansprüche 1 bis 10, bei dem man:

i. einen "der Vorläufer" genannten Feststoff trocknet und wiegt, der wenigstens eine der folgenden Verbindungen einschließt: wenigstens eine Matrix, wenigstens einen Zeolithen, der aus der Gruppe gewählt ist, die gebildet wird durch die Zeolithe NU-85, NU-86, NU-87, gegebenenfalls wenigstens ein Element, das gewählt ist aus den Elementen der Gruppe VIB und der Gruppe VIII, wenigstens ein Element aus Bor und Silizium, gegebenenfalls Phosphor und gegebenenfalls wenigstens ein Element der Gruppe VIIA, wobei das Ganze bevorzugt geformt wurde,

ii. den in Stufe a) erhaltenen trockenen Feststoff bei einer Temperatur von wenigstens 150°C kalziniert,

iii. den in Stufe b) definierten festen Vorläufer durch eine Lösung imprägniert, die wenigstens ein Element der Gruppe VB enthält,

iv. den feuchten Feststoff unter einer feuchten Atmosphäre bei einer Temperatur zwischen 10 und 120°C ruhen lässt und

v. den feuchten in Stufe b) erhaltenen Feststoff bei einer Temperatur zwischen 60 und 150°C trocknet.

**12.** Verfahren zur Herstellung eines Katalysators gemäß Anspruch 11, bei dem man in ein Gemisch aus wenigstens einer Matrix mit wenigstens einem Zeolithen, gewählt aus der Gruppe, die gebildet ist, durch die Zeolithe NU-85, NU-86, NU-87 vor oder nach der Formgebung und vor oder nach der Kalzinierung dieses Gemisches wenigstens ein Element einführt, das gewählt ist aus den Elementen der Gruppe VIII und der Gruppe VIB.

**13.** Verfahren zur Herstellung gemäß einem der Ansprüche 11 oder 12, bei dem man den Katalysator durch wenigstens

**EP 0 980 708 B1**

eine Lösung imprägniert, die wenigstens ein Element enthält, das gewählt ist aus den Elementen der Gruppe VIB und der Gruppe VIII.

14. Verfahren zur Herstellung gemäß einem der Ansprüche 11 bis 13, bei dem man den Katalysator mit wenigstens einer Lösung imprägniert, die wenigstens ein Promotorelement enthält, das aus Silizium und Bor gewählt ist.

15. Verfahren zur Herstellung gemäß einem der Ansprüche 11 bis 14, bei dem man den Katalysator mit wenigstens einer Lösung imprägniert, die wenigstens ein Element enthält, das aus den Elementen der Gruppe VIIA gewählt wurde.

16. Verfahren zur Herstellung gemäß einem der Ansprüche 11 bis 15, bei dem wenigstens eine Kalzinierung am Ende einer beliebigen der Stufen der Herstellung bei einer Temperatur von wenigstens 150°C durchgeführt wird.

17. Verfahren zur Herstellung gemäß einem der Ansprüche 11 bis 16, bei dem man die Schwefelung des Katalysators unter einem Strom eines Gemisches aus Wasserstoff/Schwefelwasserstoff oder auch unter reinem Schwefelwasserstoff bei einer Temperatur zwischen 150 und 800°C vornimmt.

18. Verwendung des Katalysators nach einem der Ansprüche 1 bis 10 oder hergestellt gemäß einem der Ansprüche 11 bis 17 bei einem Verfahren des Hydrokrackens von kohlenwasserstoffhaltigen Chargen.

19. Verwendung gemäß Anspruch 18, derart, dass die Charge gebildet wird aus wenigstens 80 Vol.-% Verbindungen, deren Siedepunkt wenigstens 350°C beträgt.

20. Verwendung nach einem der Ansprüche 18 oder 19, bei der die Temperatur über 200°C liegt, der Druck über 0,1 MPa, die Wasserstoffmenge bei mindestens 50 Liter Wasserstoff pro Liter Charge und die volumetrische stündliche Geschwindigkeit zwischen 0,1 und 20 Volumen Charge pro Volumen Katalysator und Stunde liegt.

21. Verwendung nach einem der Ansprüche 18 oder 19 bei einem Verfahren des weichen Hydrokrackens, bei dem das Umwandlungsniveau niedriger als 55 % und die Temperatur über 230°C liegt, der Druck mehr als 2 MPa und weniger als 12 MPa beträgt, die Wasserstoffmenge bei minimal 100 Liter Wasserstoff pro Liter Charge und die volumetrische stündliche Geschwindigkeit zwischen 0,15 und 10 Volumen Charge pro Volumen Katalysator und Stunde liegt.

22. Verwendung nach einem der Ansprüche 18 oder 19 bei einem Verfahren des Hydrokrackens, bei der die Umwandlung über 55 %, die Temperatur oberhalb 230°C, der Druck oberhalb 5 MPa, die Wasserstoffmenge bei minimal 100 Liter Wasserstoff pro Liter Charge und die volumetrische stündliche Geschwindigkeit zwischen 0,15 und 10 Volumen Charge pro Volumen Katalysator und Stunde liegt.

23. Verwendung nach einem der Ansprüche 18 bis 22, bei dem eine Stufe des sog. Hydrotreatments vor der Hydrokrackstufe durchgeführt wird.

24. Verwendung nach Anspruch 23, bei der die Hydrotreatmentstufe bei einer Temperatur zwischen 350°C und 460°C, einem Druck von wenigstens 2 MPa, bei einer Wasserstoffmenge von wenigstens 100 Liter Wasserstoff pro Liter Charge und einer volumetrischen stündlichen Geschwindigkeit zwischen 0,1 und 5 Volumen Charge pro Volumen Katalysator und Stunde durchgeführt wird.

**Claims**

1. A catalyst comprising at least one amorphous or poorly crystallised matrix of oxide type, at least one element from group VB, at least one zeolite selected from the group formed by zeolites NU-85, NU-86 and NU-87, and at least a promoter selected among boron and silicon.

2. A catalyst according to claim 1 further comprising phosphorus.

3. A catalyst according to one of claims 1 and 2 wherein the element from group VB is niobium.

4. A catalyst according to one of claims 1 to 3 further comprising at least one element selected from group VIB.

**5.** A catalyst according to claim 4 wherein the element from group VIB is molybdenum or tungsten.

**6.** A catalyst according to one of claims 1 to 4 further comprising at least one element selected from group VIII.

**7.** A catalyst according to claim 6 wherein the element from group VIII is iron, cobalt or nickel.

**8.** A catalyst according to one of claims 1 to 7 further comprising at least one element selected from group VIIA.

**9.** A catalyst according to claim 8 wherein the element from group VIIA is fluorine.

**10.** A catalyst according to one of claims 1 to 9 containing in percent by weight with respect to the total mass of the catalyst:

- 0.1 to 99.8% of at least one zeolite selected from the group formed by zeolites NU-85, NU-86 and NU-87,
- 0.1 to 60% of at least one element selected from group VB,
- 0.1 to 99% of at least one amorphous or poorly crystallised porous mineral matrix of oxide type,
- 0 to 60% of at least one element selected from the elements from group VIB and group VIII,
- 0.1 to 15% of at least one promoter element selected among silicon and boron, not including the silicon which is contained in the structure of zeolite, and
- 0 to 20% of phosphorus and/or at least one element selected from group VIIA.

**11.** A process for the preparation of a catalyst according to one of claims 1 to 10 wherein:

a) a solid referred to as the precursor is dried and weighed, containing at least the following components: at least one matrix, at least one zeolite selected from the group formed by zeolites NU-85, NU-86 and NU-87, at least one element selected among boron and silicon, and optionally at least one element selected from the elements from group VIB and group VIII, optionally phosphorus and/or at least one element from group VIIA, the whole preferably being shaped,
b) the dry solid obtained in step a) is calcined at a temperature of at least 150°C,
c) the precursor solid defined in step b) is impregnated by a solution containing at least one element from group VB,
d) the moist solid is left at rest in a moist atmosphere at a temperature of between 10 and 120°C, and
e) the moist solid obtained in step b) is dried at a temperature of between 60 and 150°C.

**12.** A process for the preparation of a catalyst according to claim 11 wherein there is introduced into a mixture of at least one matrix with at least one zeolite selected from the group formed by zeolites NU-85, NU-86 and NU-87, before or after the shaping operation and before or after calcination of said mixture, at least one element selected from the elements from group VIII and group VIB.

**13.** A preparation process according to one of claims 11 and 12 wherein the catalyst is impregnated with at least one solution containing at least one element selected from the elements from group VIB and group VIII.

**14.** A preparation process according to one of claims 11 to 13 wherein the catalyst is impregnated with at least one solution containing at least one promoter element selected from silicon, and boron.

**15.** A preparation process according to one of claims 11 to 14 wherein the catalyst is impregnated with at least one solution containing at least one element selected from the elements from group VIIA.

**16.** A preparation process according to one of claims 11 to 15 wherein at least one calcination operation is effected at the end of any one of the steps in the preparation procedure, at a temperature of at least 150°C.

**17.** A preparation process according to one of claims 11 to 16 wherein sulphurisation of the catalyst is effected in a flow of a hydrogen/hydrogen sulphide mixture or in pure hydrogen sulphide, at a temperature of between 150 and 800°C.

**18.** Use of the catalyst according to one of claims 1 to 10 or prepared according to one of claims 11 to 17 in a process for hydrocracking hydrocarbon charges.

19. Use according to claim 18 such that the charge is constituted by at least 80% by volume of compounds whose boiling points are at least 350°C.

20. Use according to one of claims 18 and 19 wherein the temperature is higher than 200°C, the pressure is higher than 0.1 MPa, the amount of hydrogen is at a minimum 50 litres of hydrogen per litre of charge, and the volume velocity per hour is between 0.1 and 20 volumes of charge per volume of catalyst and per hour.

21. Use according to one of claims 18 and 19 in a mild hydrocracking process wherein the level of conversion is less than 55%, the temperature is higher than 230°C, the pressure is higher than 2 MPa and lower than 12MPa, the amount of hydrogen at a minimum is 100 litres of hydrogen per litre of charge and the volume velocity per hour is between 0.15 and 10 volumes of charge per volume of catalyst and per hour.

22. Use according to one of claims 18 and 19 in a hydrocracking process wherein conversion is higher than 55%, the temperature is higher than 230°C, the pressure is higher than 5MPa, the amount of hydrogen is at a minimum 100 litres of hydrogen per litre of charge and the volume velocity per hour is between 0.15 and 10 volumes of charge per volume of catalyst and per hour.

23. Use according to one of claims 18 to 22 wherein a hydrotreatment step is effected prior to the hydrocracking step.

24. Use according to claim 23 wherein the hydrotreatment step is effected at a temperature of between 350°C and 460°C, a pressure of at least 2 MPa, with an amount of hydrogen of at least 100 litres of hydrogen per litre of charge, and with a volume velocity per hour of between 0.1 and 5 volumes of charge per volume of catalyst and per hour.